# EUROPÄISCHE PATENTSCHRIFT

(11) **EP 2 681 020 B1**
(45) Veröffentlichungstag und Bekanntmachung des Hinweises auf die Patenterteilung: **16.01.2019**
(21) Anmeldenummer: 12717173.4
(22) Anmeldetag: 02.03.2012
(51) Int. Cl.: B27B 17/02, B27B 33/14

(54) **WERKZEUGMASCHINENTRENNVORRICHTUNG**
MACHINE TOOL SEPARATING DEVICE
DISPOSITIF DE SÉPARATION POUR MACHINE-OUTIL

(30) Priorität: 03.03.2011 DE 102011005016
(43) Veröffentlichungstag der Anmeldung: 08.01.2014
(73) Patentinhaber: Robert Bosch GmbH, 70469 Stuttgart (DE)
(72) Erfinder: FUCHS, Rudolf, 73765 Neuhausen (DE); GRULICH, Petr, 73230 Kichheim unter Teck (DE); ENGELFRIED, Uwe, 73760 Ostfildern (DE)
(86) Internationale Anmeldenummer: PCT/EP2012/000921
(87) Internationale Veröffentlichungsnummer: WO 2012/116832

(56) Entgegenhaltungen:
- DE-A1- 4 219 956
- DE-A1- 4 318 492
- US-A- 2 992 660
- US-A- 4 316 327
- US-A- 4 355 551
- US-A- 4 382 334

## Beschreibung

### Stand der Technik

Es sind bereits Werkzeugmaschinentrennvorrichtungen bekannt, die einen Schneidstrang und eine Führungseinheit umfassen, welche zusammen ein geschlossenes System bilden. US 4 382 334 offenbart eine Werkzeugmaschinentrennvorrichtung nach dem Oberbegriff des Anspruchs 1.

### Offenbarung der Erfindung

Die Erfindung geht aus von einer Werkzeugmaschinentrennvorrichtung, insbesondere von einer Handwerkzeugmaschinentrennvorrichtung, mit zumindest einem Schneidstrang und mit zumindest einer Führungseinheit, die ein geschlossenes System bilden.
Es wird vorgeschlagen, dass die Führungseinheit zumindest ein Führungseinheitshauptelement und/oder eine Schneidstranghalteeinheit umfasst, wobei zumindest das Führungseinheitshauptelement und/oder die Schneidstranghalteeinheit zumindest zwei Führungsflächen aufweist, die zueinander verschiedene Ausrichtungen aufweisen und die in einem montierten Zustand zur Führung des Schneidstrangs vorgesehen sind. Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Der Schneidstrang ist besonders bevorzugt als Schneidkette ausgebildet, die entlang eines Umfangs der Führungseinheit umlaufend und/oder oszillierend antreibbar ist. Der Schneidstrang umfasst somit vorzugsweise Schneidenträgerelemente, die als Kettenglieder ausgebildet sind. Hierbei können die Schneidenträgerelemente lösbar, wie beispielsweise mittels eines Kettenschlosses usw., und/oder unlösbar miteinander verbunden sein. Es ist jedoch auch denkbar, aber nicht erfindungsgemäß, dass der Schneidstrang als Schneidband und/oder Schneidseil ausgebildet ist. Bei einer Ausbildung des Schneidstrangs als Schneidband und/oder als Schneidseil werden die Schneidenträgerelemente direkt an dem Schneidband und/oder an dem Schneidseil fixiert und sind umlaufend und/oder oszillierend entlang eines Umfangs der Führungseinheit antreibbar.
Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Besonders bevorzugt ist die Führungseinheit zweiteilig ausgebildet. In diesem Zusammenhang soll unter "vorgesehen" insbesondere speziell ausgelegt und/oder speziell ausgestattet verstanden werden. Bevorzugt weist die Führungseinheit zumindest ein Führungselement auf, insbesondere eine Führungsnut, durch das der Schneidstrang geführt wird. Bevorzugt ist der Schneidstrang, in einer Schneidebene betrachtet, entlang eines gesamten Umfangs der Führungseinheit durch die Führungseinheit mittels des Führungselements, insbesondere der Führungsnut, geführt. Der Begriff "Schneidebene" soll hier insbesondere eine Ebene definieren, in der der Schneidstrang entlang eines Umfangs der Führungseinheit in zumindest zwei zueinander entgegengesetzt gerichtete Schneidrichtungen relativ zur Führungseinheit bewegt wird. Bevorzugt ist die Schneidebene bei einer Bearbeitung eines Werkstücks zumindest im Wesentlichen quer zu einer bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer bearbeitenden Werkstückoberfläche ausgerichtet ist, insbesondere bei einer Ausbildung des Schneidstrangs als Schleifmittel usw. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.
Unter einer "Schneidrichtung" soll hier insbesondere eine Richtung verstanden werden, entlang der der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt. Bevorzugt weist die Führungseinheit eine geometrische Gestalt auf, die, in der Schneidebene betrachtet, eine in sich geschlossene Außenkontur aufweist, die zumindest zwei zueinander parallel verlaufende Geraden und zumindest zwei jeweils sich zugewandte Enden der Geraden miteinander verbindende Verbindungsabschnitte, insbesondere Kreisbögen, umfasst. Der Begriff "geschlossenes System" soll hier ein System definieren, das zumindest zwei Komponenten umfasst, die mittels eines Zusammenwirkens in einem demontierten Zustand des Systems von einem dem System übergeordneten System, wie beispielsweise einer Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmittel usw., voneinander trennbar sind.
Besonders bevorzugt sind die zumindest zwei Führungsflächen aneinander angrenzend ausgebildet. Hierbei sind die zumindest zwei Führungsflächen vorzugsweise zumindest im Wesentlichen senkrecht zueinander angeordnet. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Die Führungsflächen sind besonders bevorzugt einstückig mit dem Führungseinheitshauptelement ausgebildet. Unter einem "Führungseinheitshauptelement" soll hier insbesondere ein Element der Führungseinheit verstanden werden, das zumindest einen Massenanteil von mehr als 20 %, bevorzugt mehr als 30 % und besonders bevorzugt mehr als 40 % einer Gesamtmasse der Führungseinheit ausmacht und/oder das zumindest einen Volumenanteil von mehr als 20 %, bevorzugt mehr als 30 % und besonders bevorzugt mehr als 40 % eines Gesamtvolumens der Führungseinheit ausmacht. Unter "einstückig" soll hier insbesondere zumindest stoffschlüssig verbunden verstanden werden, beispielsweise durch einen Schweißprozess, einen Klebeprozess, einen Anspritzprozess und/oder einen anderen, einem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Des Weiteren soll der Begriff "Schneidstranghalteeinheit" eine Einheit definieren, die den Schneidstrang auf einer Antriebsseite der Führungseinheit in einem von einer Kopplungsvorrichtung einer tragbaren Werkzeugmaschine demontierten Zustand der Werkzeugmaschinentrennvorrichtung, insbesondere der Führungseinheit, zumindest im Wesentlichen in einer Montageposition des Schneidstrangs hält. Insbesondere wird der Schneidstrang bei einer getrennt von einem in der Führungseinheit angeordneten Drehmomentübertragungselement ausgebildeten Werkzeugmaschinentrennvorrichtung mittels der Schneidstranghalteeinheit auf einer Antriebsseite der Führungseinheit in einem von der Kopplungsvorrichtung demontierten Zustand der Werkzeugmaschinentrennvorrichtung, insbesondere der Führungseinheit, in einer Montageposition des Schneidstrangs gehalten. Unter einer "Antriebsseite" soll hier insbesondere eine Seite der Führungseinheit, betrachtet in der Schneidebene des Schneidstrangs, verstanden werden, an der ein Antriebselement der tragbaren Werkzeugmaschine zu einer Übertragung von Antriebskräften und/oder Antriebsdrehmomenten auf den Schneidstrang in einem mit der Kopplungsvorrichtung verbundenen Zustand der Werkzeugmaschinentrennvorrichtung, insbesondere der Führungseinheit, mit dem Schneidstrang koppelbar ist und insbesondere in die Führungseinheit eingreift. Der Begriff "Montageposition" soll hier insbesondere eine Position des Schneidstrangs in einem in der Führungseinheit angeordneten Zustand definieren, in der bei einer Kopplung der Werkzeugmaschinentrennvorrichtung, insbesondere der Führungseinheit, mit der Kopplungsvorrichtung der Schneidstrang direkt mit dem Antriebselement der tragbaren Werkzeugmaschine verbindbar ist. Bevorzugt ist das Antriebselement in der Montageposition des Schneidstrangs in die Führungseinheit einführbar während der Schneidstrang entkoppelt von einem Halten des Schneidstrangs durch einen Bediener mit dem Antriebselement koppelbar ist. Mittels der erfindungsgemäßen Ausgestaltung der Werkzeugmaschinentrennvorrichtung kann vorteilhaft ein kompakter Aufbau der Werkzeugmaschinentrennvorrichtung realisiert werden. Ferner können vorteilhaft Montageschritte zur Montage der Werkzeugmaschinentrennvorrichtung eingespart werden.

Des Weiteren wird vorgeschlagen, dass die Führungseinheit zumindest ein weiteres Führungseinheitshauptelement umfasst, das zumindest zwei Führungsflächen aufweist, die zueinander verschiedene Ausrichtungen aufweisen und die in einem montierten Zustand zur Führung des Schneidstrangs vorgesehen sind. Die Führungsflächen sind besonders bevorzugt einstückig mit dem weiteren Führungseinheitshauptelement ausgebildet. Vorzugsweise bilden das Führungseinheitshauptelement und das weitere Führungseinheitshauptelement in einem montierten Zustand eine Führungsnut zur Aufnahme des Schneidstrangs. Es kann konstruktiv einfach die Führungseinheit zur Führung des Schneidstrangs erreicht werden.

Vorteilhafterweise sind das Führungseinheitshauptelement und das weitere Führungseinheitshauptelement in einem montierten Zustand mittels einer formschlüssigen und/oder kraftschlüssigen Verbindung miteinander verbunden. Es ist jedoch auch denkbar, dass das Führungseinheitshauptelement und das weitere Führungseinheitshauptelement in einem montierten Zustand mittels einer stoffschlüssigen Verbindung miteinander verbunden sind. Besonders bevorzugt sind das Führungseinheitshauptelement und das weitere Führungseinheitshauptelement in einem montierten Zustand in der Schneidebene des Schneidstrangs lösbar miteinander verbunden. Vorzugsweise werden das Führungseinheitshauptelement und das weitere Führungseinheitshauptelement aus Keramik gebildet. Es ist jedoch auch denkbar, dass das Führungseinheitshauptelement und das weitere Führungseinheitshauptelement aus einem anderen, einem Fachmann als sinnvoll erscheinenden Werkstoff gebildet werden. Besonders bevorzugt wird die Führungseinheit mittels einer Montage des Führungseinheitshauptelements und des weiteren Führungseinheitshauptelements gebildet. Die Führungseinheit umfasst somit zu einer Funktionserfüllung nur zwei Bauteile, ausgenommen von der Anzahl von Bauteilen der Führungseinheit sind hierbei zur Verbindung des Führungseinheitshauptelements und des weiteren Führungseinheitshauptelements notwendige Verbindungselemente. Es kann konstruktiv einfach eine zweiteilige Ausgestaltung der Führungseinheit erreicht werden.

Ferner wird vorgeschlagen, dass die Führungseinheit, in einer Schneidebene des Schneidstrangs betrachtet, zumindest zwei konvex ausgebildete Enden aufweist. Unter "konvex ausgebildet" soll hier insbesondere eine geometrische Gestalt der Verbindungsabschnitte der Außenkontur der Führungseinheit verstanden werden, die ausgehend von der Führungseinheit nach außen gewölbt ausgebildet ist. Bevorzugt weisen die Verbindungsabschnitte hierbei einen Radius auf, der von einem Mittelpunkt ausgeht, der in einer in der Schneidebene verlaufenden Seitenfläche der Führungseinheit angeordnet ist. Es kann konstruktiv einfach eine Umlenkung des Schneidstrangs während einer Bewegung des Schneidstrangs entlang eines Umfangs der Führungseinheit erreicht werden. In einer alternativen Ausgestaltung ist es denkbar, dass die Führungseinheit an den Verbindungsabschnitten jeweils ein drehbar gelagertes Umlenkelement, wie beispielsweise eine Rolle, ein Zahnrad, usw., aufweist. Der Schneidstrang kann bei einer Bewegung entlang eines Umfangs der Führungseinheit somit vorteilhaft reibungsarm mittels der drehbar gelagerten Umlenkelemente umgelenkt werden.

Des Weiteren wird vorgeschlagen, dass die Schneidstranghalteeinheit zumindest teilweise an dem Führungseinheitshauptelement angeordnet ist. Bevorzugt ist die Schneidstranghalteeinheit im Bereich der Antriebsseite an dem Führungseinheitshauptelement angeordnet. Hierbei ist die Schneidstranghalteeinheit bevorzugt mittels einer kraftschlüssigen und/oder mittels einer stoffschlüssigen Verbindung an dem Führungseinheitshauptelement angeordnet, wie beispielsweise mittels einer Schraubverbindung, einer Schweißverbindung, einer Lötverbindung und/oder einer Klebeverbindung usw. Es ist jedoch auch denkbar, dass die Schneidstranghalteeinheit mittels einer anderen, einem Fachmann als sinnvoll erscheinenden Verbindungsart an dem Führungseinheitshauptelement angeordnet ist, wie beispielsweise mittels einer formschlüssigen Verbindung. Mittels der erfindungsgemäßen Ausgestaltung kann konstruktiv einfach eine kompakte Werkzeugmaschinentrennvorrichtung realisiert werden.

Vorteilhafterweise umfasst die Schneidstranghalteeinheit zumindest ein scheibenförmiges Schneidstranghaltelement, das dazu vorgesehen ist, den Schneidstrang in zumindest einer Position, insbesondere der Montageposition, zu halten. Unter "scheibenförmig" soll hier insbesondere eine geometrische Ausgestaltung eines Elements verstanden werden, das eine Erstreckung, insbesondere eine Stärke bzw. eine Höhe, entlang zumindest einer ersten Richtung aufweist, die um ein Vielfaches geringer ist als eine weitere Erstreckung des Elements, insbesondere eine Breite bzw. ein Durchmesser, entlang einer weiteren, zumindest im Wesentlichen parallel zur ersten Richtung verlaufenden Richtung. Es ist jedoch auch denkbar, dass das Schneidstranghalteelement eine andere, einem Fachmann als sinnvoll erscheinende Ausgestaltung aufweist. Bevorzugt ist das Schneidstranghalteelement dazu vorgesehen, den Schneidstrang mittels einer formschlüssigen Verbindung, insbesondere mittels einer Fläche des Schneidstranghalteelements, in zumindest einer Position, insbesondere der Montageposition, zu halten. Es ist jedoch auch denkbar, dass das Schneidstranghalteelement den Schneidstrang mittels eines anderen, einem Fachmann als sinnvoll erscheinenden Mittel, wie beispielsweise mittels einer magnetischen Kraft usw., in zumindest einer Position hält. Das Schneidstranghaltelement kann hierbei einstückig mit einem Werkzeugmaschinenkopplungselement der Schneidstranghalteeinheit ausgebildet sein oder das Schneidstranghaltelement kann getrennt von dem Werkzeugmaschinenkopplungselement ausgebildet sein. Besonders bevorzugt umfasst die Schneidstranghalteeinheit zumindest zwei scheibenförmige Schneidstranghaltelemente. Hierbei sind die zwei Schneidstranghalteelemente vorzugsweise jeweils in einer von zwei parallel zur Schneidebene des Schneidstrangs und zumindest im Wesentlichen parallel zueinander versetzt angeordneten Ebenen angeordnet. Es kann vorteilhaft ein Hineinfallen des Schneidstrangs in eine Kopplungsausnehmung der Führungseinheit verhindert werden. Hierdurch kann vorteilhaft eine einfache und komfortable Montage der Werkzeugmaschinentrennvorrichtung, insbesondere der Führungseinheit, an der Kopplungsvorrichtung gewährleistet werden, wobei ein Halten des Schneidstrangs von einem Bediener zur Kopplung des Antriebselements mit dem Schneidstrang vorteilhaft vermieden werden kann.

Zudem wird vorgeschlagen, dass das Schneidstranghalteelement zumindest eine Antriebselementkopplungsausnehmung aufweist. Besonders bevorzugt ist die Antriebselementkopplungsausnehmung oval ausgebildet. Es ist jedoch auch denkbar, dass die Antriebselementkopplungsausnehmung eine andere, einem Fachmann als sinnvoll erscheinende Ausgestaltung aufweist, wie beispielsweise eine kreisrunde Ausgestaltung, eine Ausgestaltung als Langloch usw. Mittels der erfindungsgemäßen Ausgestaltung kann vorteilhaft ein komfortables Einführen des Antriebselements der tragbaren Werkzeugmaschine bei einer Kopplung der Werkzeugmaschinentrennvorrichtung, insbesondere der Führungseinheit, mit der Kopplungsvorrichtung der tragbaren Werkzeugmaschine erreicht werden, wobei der Schneidstrang vorteilhaft mittels des Schneidstranghalteelements in der Montageposition gehalten wird.

Besonders vorteilhaft weist die Schneidstranghalteeinheit zumindest das Schneidstranghalteelement und zumindest ein Werkzeugmaschinenkopplungselement auf, das einstückig mit dem Schneidstranghalteelement ausgebildet ist. Unter einem "Werkzeugmaschinenkopplungselement" soll hier insbesondere ein Element verstanden werden, das zu einer Kopplung der Werkzeugmaschinentrennvorrichtung, insbesondere der Führungseinheit, mit der tragbaren Werkzeugmaschine vorgesehen ist. Das Werkzeugmaschinenkopplungselement ist bevorzugt dazu vorgesehen ist, eine formschlüssige und/oder eine kraftschlüssige Verbindung zwischen der Werkzeugmaschinentrennvorrichtung und der tragbaren Werkzeugmaschine zu einem Betrieb der Werkzeugmaschinentrennvorrichtung, insbesondere zu einem Antrieb des Schneidstrangs mittels eines Antriebselements der tragbaren Werkzeugmaschine, zu realisieren. Hierbei wird das Werkzeugmaschinenkopplungselement vorzugsweise in einen mit dem Werkzeugmaschinenkopplungselement korrespondierend ausgebildeten Aufnahmebereich der Kopplungsvorrichtung eingelegt. Es ist jedoch auch denkbar, dass das Werkzeugmaschinenkopplungselement zu einer Kopplung der Werkzeugmaschinentrennvorrichtung, insbesondere der Führungseinheit, mit der tragbaren Werkzeugmaschine auf eine andere, einem Fachmann als sinnvoll erscheinenden Art und Weise an der Kopplungsvorrichtung anordenbar ist. Mittels einer einstückigen Ausgestaltung des Werkzeugmaschinenkopplungselements und des Schneidstranghalteelements kann vorteilhaft eine kompakte Ausgestaltung der Schneidstranghalteeinheit erreicht werden. Zudem können vorteilhaft Bauraum, Kosten und Montageaufwand eingespart werden.
Ferner wird vorgeschlagen, dass die Schneidstranghalteeinheit zumindest das Schneidstranghaltelement umfasst, das entlang einer zumindest im Wesentlichen senkrecht zur Schneidebene des Schneidstrangs verlaufenden Richtung betrachtet zwischen zumindest zwei Werkzeugmaschinenkopplungselementen der Schneidstranghalteeinheit angeordnet ist. Hierdurch kann konstruktiv einfach in einem von der tragbaren Werkzeugmaschine abgenommenen Zustand der Werkzeugmaschinentrennvorrichtung, insbesondere der Führungseinheit, ein Hineinfallen des Schneidstrangs in eine Kopplungsausnehmung der Führungseinheit verhindert werden.

Erfindungsgemäß umfasst der Schneidstrang zumindest zwei miteinander verbundene Schneidenträgerelemente, die mittels zumindest eines Verbindungselements des Schneidstrangs miteinander verbunden sind, das zumindest im Wesentlichen bündig mit zumindest einer Außenfläche eines der zumindest zwei Schneidenträgerelemente abschließt. Unter einem "Schneidenträgerelement" soll hier insbesondere ein Element verstanden werden, an dem zumindest ein Schneidelement zum Abtrennen und/oder zum Abtragen von Werkstoffteilchen eines zu bearbeitenden Werkstücks fixiert ist. Der Begriff "Verbindungselement" soll hier insbesondere ein Element definieren, das dazu vorgesehen ist, zumindest zwei Bauteile formschlüssig und/oder kraftschlüssig miteinander zu verbinden, insbesondere beweglich miteinander zu verbinden, um eine Antriebskraft und/oder ein Antriebsmoment zu übertragen. Erfindungsgemäß ist das Verbindungselement bolzenförmig und einstückig mit einem Schneidenträgerelement ausgebildet. Somit weisen die Schneidenträgerelemente jeweils ein Verbindungselement und eine Verbindungsausnehmung zur Aufnahme eines Verbindungselements eines mit dem jeweiligen Schneidenträgerelement verbindbaren weiteren Schneidenträgerelements auf. Unter "zumindest im Wesentlichen bündig abschließen" soll hier eine Anordnung des Verbindungselements in einem montierten Zustand verstanden werden, wobei sich das Verbindungselement in einem montierten Zustand, entlang einer Längsachse des Verbindungselements betrachtet, innerhalb der zumindest einen das Verbindungselement aufnehmenden Verbindungsausnehmung erstreckt und sich maximal bis zu einer Außenfläche des Schneidenträgerelements erstreckt, das die Verbindungsausnehmung aufweist. Es wird eine kompakte Ausgestaltung der Werkzeugmaschinentrennvorrichtung erreicht. Zudem wird vorgeschlagen, dass das Verbindungselement zumindest teilweise mittels eines Führungselements der Führungseinheit geführt ist. Das Verbindungselement ist hierbei in einem montierten Zustand bevorzugt in einer Führungsnut der Führungseinheit angeordnet. Es kann konstruktiv einfach eine Sicherung des Verbindungselements in der Verbindungsausnehmung bei einer Verbindung der Schneidenträgerelemente erreicht werden.
Vorteilhafterweise weist die Werkzeugmaschinentrennvorrichtung ein Drehmomentübertragungselement auf, das zumindest teilweise in der Führungseinheit gelagert ist, insbesondere beweglich gelagert. Bevorzugt weist das Drehmomentübertragungselement eine konzentrische Ausnehmung auf, in die ein Ritzel einer Antriebseinheit einer tragbaren Werkzeugmaschine und/oder ein Zahnrad und/oder eine verzahnte Welle einer Getriebeeinheit der tragbaren Werkzeugmaschine in einem montierten Zustand eingreifen kann. Die Ausnehmung wird hierbei bevorzugt von einem Innensechskant gebildet. Es ist jedoch auch denkbar, dass die Ausnehmung eine andere, einem Fachmann als sinnvoll erscheinende Ausgestaltung aufweist. Mittels der erfindungsgemäßen Ausgestaltung der Werkzeugmaschinentrennvorrichtung kann konstruktiv einfach ein geschlossenes System erreicht werden, das komfortabel von einem Bediener an einer dazu vorgesehenen Werkzeugmaschine montierbar ist. Es kann somit vorteilhaft auf eine Einzelmontage von Komponenten, wie beispielsweise des Schneidstrangs, der Führungseinheit und des Drehmomentübertragungselements, durch den Bediener zum Gebrauch der erfindungsgemäßen Werkzeugmaschinentrennvorrichtung vermieden werden.
Des Weiteren wird vorgeschlagen, dass die Führungseinheit einen sich, entlang einer Schneidrichtung des Schneidstrangs betrachtet, zumindest in einem Teilbereich der Führungseinheit verändernden Querschnitt in einer Richtung zumindest im Wesentlichen senkrecht zu einer Schneidebene des Schneidstrangs aufweist.

Der Begriff "Querschnitt" soll hier insbesondere eine Abmessung, wie beispielsweise eine Länge einer Strecke usw., und/oder einen Flächeninhalt eines Bauteils definieren, insbesondere betrachtet in einem senkrecht zur Schneidebene verlaufenden Schnitt durch das Bauteil. Es kann vorteilhaft eine hohe Stabilität der Führungseinheit erreicht werden.

Es wird ferner eine tragbare Werkzeugmaschine mit der Kopplungsvorrichtung zur formschlüssigen und/oder kraftschlüssigen Kopplung mit der erfindungsgemäßen Werkzeugmaschinentrennvorrichtung erwähnt. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Besonders bevorzugt bilden die erfindungsgemäße Werkzeugmaschinentrennvorrichtung und die tragbare Werkzeugmaschine ein Werkzeugmaschinensystem. Es kann vorteilhaft ein hoher Bedienkomfort für einen Bediener, insbesondere bei einem Werkzeugwechsel erreicht werden. Zudem kann mit dem erfindungsgemäßen Werkzeugmaschinensystem ein breites Einsatzspektrum vorteilhaft abgedeckt werden.

Die erfindungsgemäße Werkzeugmaschinentrennvorrichtung soll hierbei nicht auf die oben beschriebene Anwendung und Ausführungsform beschränkt sein. Insbesondere kann die erfindungsgemäße Werkzeugmaschinentrennvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße tragbare Werkzeugmaschine mit einer erfindungsgemäßen Werkzeugmaschinentrennvorrichtung in einer schematischen Darstellung,
- Fig. 2: eine Schnittansicht einer Führungseinheit der erfindungsgemäßen Werkzeugmaschinentrennvorrichtung in einer schematischen Darstellung,
- Fig. 3: eine Detailansicht der erfindungsgemäßen Werkzeugmaschinentrennvorrichtung in einer schematischen Darstellung,
- Fig. 4: eine Schnittansicht entlang der Linie IV-IV aus Figur 3 der erfindungsgemäßen Werkzeugmaschinentrennvorrichtung in einer schematischen Darstellung,
- Fig. 5: eine Detailansicht von Schneidenträgerelementen der erfindungsgemäßen Werkzeugmaschinentrennvorrichtung in einer schematischen Darstellung,
- Fig. 6: eine weitere Detailansicht eines der Schneidenträgerelemente des Schneidstrangs der erfindungsgemäßen Werkzeugmaschinentrennvorrichtung in einer schematischen Darstellung,
- Fig. 7: eine Detailansicht einer Anordnung der Schneidenträgerelemente in einer Führungseinheit der erfindungsgemäßen Werkzeugmaschinentrennvorrichtung in einer schematischen Darstellung,
- Fig. 8: eine alternative Ausgestaltung einer erfindungsgemäßen Werkzeugmaschinentrennvorrichtung in einer schematischen Darstellung,
- Fig. 9: eine Detailansicht einer weiteren, alternativen erfindungsgemäßen Werkzeugmaschinentrennvorrichtung in einer schematischen Darstellung,
- Fig. 10: eine Detailansicht einer Schneidstranghalteeinheit der weiteren, alternativen Werkzeugmaschinentrennvorrichtung in einer schematischen Darstellung,
- Fig. 11: eine weitere Detailansicht der Schneidstranghalteeinheit in einer schematischen Darstellung und
- Fig. 12: eine Detailansicht einer alternativen Ausgestaltung einer Schneidstranghalteeinheit der weiteren, alternativen Werkzeugmaschinentrennvorrichtung in einer schematischen Darstellung.

### Beschreibung der Ausführungsbeispiele

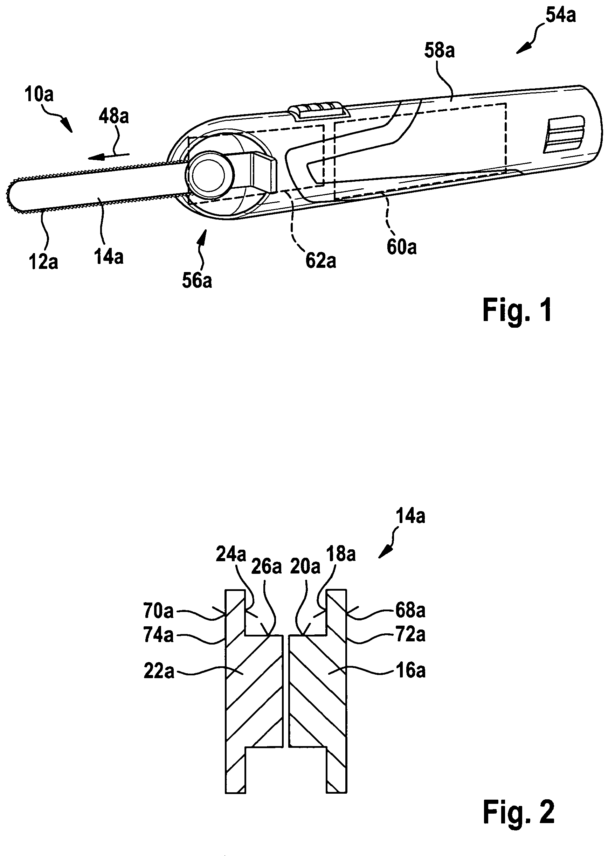

Figur 1 zeigt eine tragbare Werkzeugmaschine 54a mit einer Werkzeugmaschinentrennvorrichtung 10a, die zusammen ein Werkzeugmaschinensystem bilden. Die tragbare Werkzeugmaschine 54a weist eine Kopplungsvorrichtung 56a zur formschlüssigen und/oder kraftschlüssigen Kopplung mit der Werkzeugmaschinentrennvorrichtung 10a auf. Die Kopplungsvorrichtung 56a kann hierbei als Bajonettverschluss und/oder als andere, einem Fachmann als sinnvoll erscheinende Kopplungsvorrichtung ausgebildet sein. Ferner weist die tragbare Werkzeugmaschine 54a ein Werkzeugmaschinengehäuse 58a auf, das eine Antriebseinheit 60a und eine Getriebeeinheit 62a der tragbaren Werkzeugmaschine 54a umschließt. Die Antriebseinheit 60a und die Getriebeeinheit 62a sind zur Erzeugung eines auf die Werkzeugmaschinentrennvorrichtung 10a übertragbaren Antriebsmoments auf eine einem Fachmann bereits bekannte Art und Weise wirkungsmäßig miteinander verbunden. Die Getriebeeinheit 62a ist als Winkelgetriebe ausgebildet. Die Antriebseinheit 60a ist als Elektromotoreinheit ausgebildet. Es ist jedoch auch denkbar, dass die Antriebseinheit 60a und/oder die Getriebeeinheit 62a eine andere, einem Fachmann als sinnvoll erscheinende Ausgestaltung aufweisen. Die Antriebseinheit 60a ist dazu vorgesehen, einen Schneidstrang 12a der Werkzeugmaschinentrennvorrichtung 10a in zumindest einem Betriebszustand mit einer Schnittgeschwindigkeit kleiner als 6 m/s anzutreiben. Hierbei weist die tragbare Werkzeugmaschine 54a zumindest einen Betriebsmodus auf, in dem ein Antrieb des Schneidstrangs 12a in einer Führungseinheit 14a der Werkzeugmaschinentrennvorrichtung 10a entlang einer Schneidrichtung 48a des Schneidstrangs 12a mit einer Schnittgeschwindigkeit kleiner als 6 m/s ermöglicht wird.

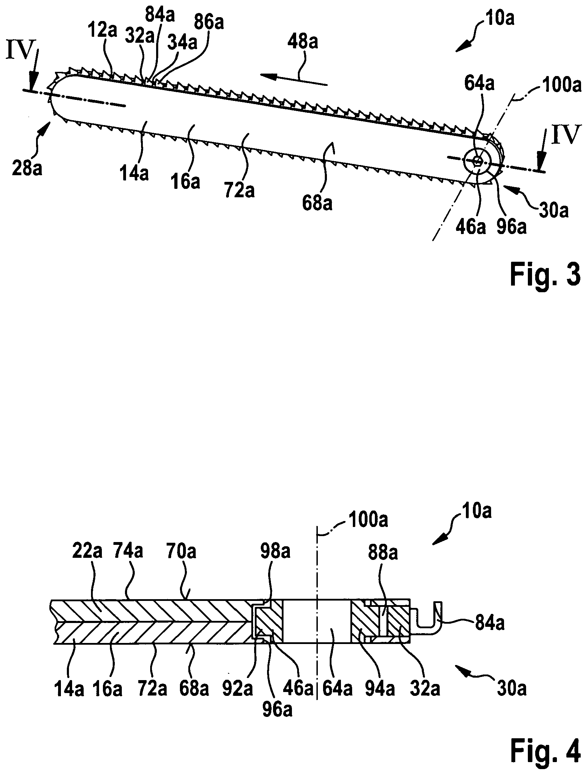

Figur 2 zeigt eine Schnittansicht der Führungseinheit 14a in einem unmontierten Zustand. Die Führungseinheit 14a umfasst ein Führungseinheitshauptelement 16a, das zwei Führungsflächen 18a, 20a aufweist, die zueinander verschiedene Ausrichtungen aufweisen und die in einem montierten Zustand der Führungseinheit 14a zur Führung des in der Führungseinheit 14a angeordneten Schneidstrangs 12a vorgesehen sind. Die Führungsflächen 18a, 20a sind aneinander angrenzend ausgebildet. Hierbei sind die Führungsflächen 18a, 20a zumindest im Wesentlichen senkrecht zueinander angeordnet. Eine der Führungsflächen 18a, 20a verläuft zumindest im Wesentlichen parallel zu einer Außenfläche 68a einer Außenwand 72a des Führungseinheitshauptelements 16a. Die parallel zur Außenfläche 68a der Außenwand 72a verlaufende Führungsfläche 18a setzt sich zusammen aus zwei Rechteckflächen und zwei Halbkreisringflächen, die entlang eines Umfangs des Führungseinheitshauptelements 16a aneinander angrenzend angeordnet sind und einen in sich geschlossenen Verlauf aufweisen. Somit erstreckt sich die parallel zur Außenfläche 68a der Außenwand 72a verlaufende Führungsfläche 18a entlang des gesamten Umfangs des Führungseinheitshauptelements 16a, entlang einer in einem montierten Zustand in einer Schneidebene des Schneidstrangs 12a verlaufenden Umfangsrichtung betrachtet. Ferner verläuft eine der Führungsflächen 18a, 20a zumindest im Wesentlichen senkrecht zur Außenfläche 68a der Außenwand 72a. Die senkrecht zur Außenfläche 68a der Außenwand 72a verlaufende Führungsfläche 20a erstreckt sich zumindest im Wesentlichen entlang des gesamten Umfangs des Führungseinheitshauptelements 16a. Hierbei ist im Bereich eines in der Führungseinheit 14a angeordneten Drehmomentübertragungselements 46a der Werkzeugmaschinentrennvorrichtung 10a (Figur 3) eine Aussparung (hier nicht näher dargestellt) in der senkrecht zur Außenfläche 68a der Außenwand 72a verlaufenden Führungsfläche 20a vorgesehen. Hierdurch wird ein Eingreifen des Drehmomentübertragungselements 46a in den Schneidstrang 12a in einem in der Führungseinheit 14a angeordneten Zustand des Schneidstrangs 12a realisiert.

Zudem weist die Führungseinheit 14a ein weiteres Führungseinheitshauptelement 22a auf, das zwei weitere Führungsflächen 24a, 26a aufweist, die zueinander verschiedene Ausrichtungen aufweisen und die in einem montierten Zustand der Führungseinheit 14a zur Führung des in der Führungseinheit 14a angeordneten Schneidstrangs 12a vorgesehen sind. Ferner ist es denkbar, dass die Führungseinheit 14c zusätzlich zum Führungseinheitshauptelement 16a und dem weiteren Führungseinheitshauptelement 22a eine Schneidstranghalteeinheit (hier nicht näher dargestellt) aufweist, die zumindest zwei Führungsflächen aufweist, die zueinander verschiedene Ausrichtungen aufweisen und die in einem montierten Zustand zur Führung des Schneidstrangs 12a vorgesehen sind. Die weiteren Führungsflächen 24a, 26a des weiteren Führungseinheitshauptelements 22a weisen an dem weiteren Führungseinheitshauptelement 22a eine zu einer Anordnung der Führungsflächen 18a, 20a an dem Führungseinheitshauptelement 16a analoge Anordnung auf. Ferner weisen die weiteren Führungsflächen 24a, 26a des weiteren Führungseinheitshauptelements 22a eine zu den Führungsflächen 18a, 20 des Führungseinheitshauptelements 16a analoge Ausgestaltung auf. Das Führungseinheitshauptelement 16a und das weitere Führungseinheitshauptelement 22a sind in einem montierten Zustand in der Schneidebene des Schneidstrangs 12a lösbar mittels einer formschlüssigen und/oder einer kraftschlüssigen Verbindung miteinander verbunden. Hierbei bilden das Führungseinheitshauptelement 16a und das weitere Führungseinheitshauptelement 22a in einem montierten Zustand ein Führungselement 44a der Führungseinheit 14a zur Führung des Schneidstrangs 12a. Das Führungseinheitshauptelement 16a und das weitere Führungseinheitshauptelement 22a sind jeweils T-förmig ausgebildet.

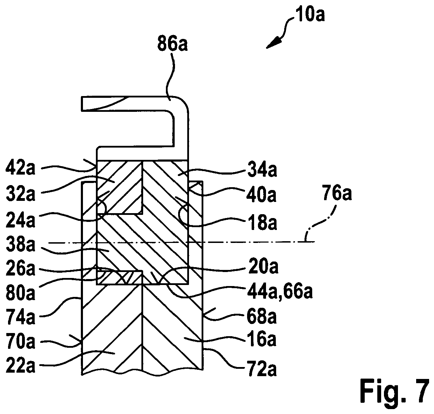

Figur 3 zeigt die Werkzeugmaschinentrennvorrichtung 10a in einem von der Kopplungsvorrichtung 56a der tragbaren Werkzeugmaschine 54a entkoppelten Zustand. Die Werkzeugmaschinentrennvorrichtung 10a weist den Schneidstrang 12a und die Führungseinheit 14a auf, die zusammen ein geschlossenes System bilden. Die Führungseinheit 14a ist als Schwert ausgebildet. Ferner weist die Führungseinheit 14a, in der Schneidebene des Schneidstrangs 12a betrachtet, zumindest zwei konvex ausgebildete Enden 28a, 30a auf. Die konvex ausgebildeten Enden 28a, 30a der Führungseinheit 14a sind an zwei sich abgewandten Seiten der Führungseinheit 14a angeordnet. Der Schneidstrang 12a wird mittels der Führungseinheit 14a geführt. Hierzu weist die Führungseinheit 14a zumindest das Führungselement 44a auf (Figuren 2 und 7) mittels dessen der Schneidstrang 12a geführt wird. Das Führungselement 44a ist als Führungsnut 66a (Figuren 2 und 7) ausgebildet, die sich in der Schneidebene des Schneidstrangs 12a entlang eines gesamten Umfangs der Führungseinheit 14a erstreckt.

Der Schneidstrang 12a wird mittels der Führungsnut 66a begrenzende Randbereiche der Führungseinheit 14a geführt. Die die Führungsnut 66a begrenzenden Randbereiche werden hierbei von den Führungsflächen 18a, 20a des Führungseinheitshauptelements 16a und den weiteren Führungsflächen 24a, 26a des weiteren Führungseinheitshauptelements 22a gebildet (Figur 2). Es ist jedoch auch denkbar, dass das Führungselement 44a in einer anderen, einem Fachmann als sinnvoll erscheinenden Art und Weise, wie beispielsweise als rippenartige Anformung an der Führungseinheit 14a, die in eine Ausnehmung an dem Schneidstrang 12a eingreift, ausgebildet ist. Der Schneidstrang 12a wird, in einer senkrecht zur Schneidebene verlaufenden Ebene betrachtet, von drei Seiten von den Führungsflächen 18a, 20a und den weiteren Führungsflächen 24a, 26a umgeben (Figuren 2 und 7). Der Schneidstrang 12a wird während eines Betriebs umlaufend entlang des Umfangs in der Führungsnut 66a relativ zur Führungseinheit 14a bewegt.

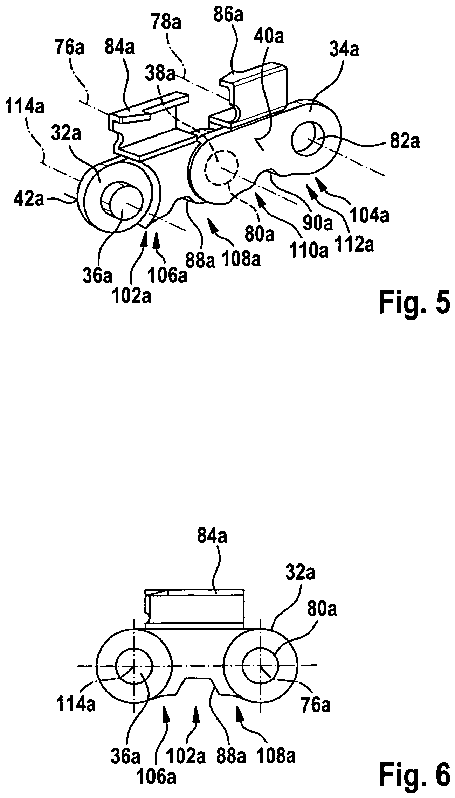

Der Schneidstrang 12a umfasst eine Vielzahl miteinander verbundener Schneidenträgerelemente 32a, 34a, die jeweils mittels zumindest eines Verbindungselements 36a, 38a des Schneidstrangs 12a miteinander verbunden sind, das zumindest im Wesentlichen bündig mit zumindest einer von zwei Außenflächen 40a, 42a der miteinander verbundenen Schneidenträgerelemente 32a, 34a abschließt (Figuren 5 und 6). Die Verbindungselemente 36a, 38a sind bolzenförmig ausgebildet. Die Außenflächen 40a, 42a verlaufen in einem in der Führungsnut 66a angeordneten Zustand des Schneidstrangs 12a zumindest im Wesentlichen parallel zur Schneidebene. Ein Fachmann wird je nach Anwendungsfall eine für den Schneidstrang 12a geeignete Anzahl an Schneidenträgerelementen 32a, 34a auswählen.

Die Schneidenträgerelemente 32a, 34a sind jeweils einstückig mit einem der Verbindungselemente 36a, 38a ausgebildet. Ferner weisen die Schneidenträgerelemente 32a, 34a jeweils eine Verbindungsausnehmung 80a, 82a zur Aufnahme eines der Verbindungselemente 36a, 38a der miteinander verbundenen Schneidenträgerelemente 32a, 34a auf. Die Verbindungselemente 36a, 38a sind mittels der Führungseinheit 14a geführt (Figur 7). Hierbei sind die Verbindungselemente 36a, 38a in einem montierten Zustand des Schneidstrangs 12a in der Führungsnut 66a angeordnet. Die Verbindungselemente 36a, 38a können sich, in einer senkrecht zur Schneidebene verlaufenden Ebene betrachtet, an der zumindest im Wesentlichen parallel zu der Außenfläche 68a verlaufenden Führungsfläche 18a und an der zumindest im Wesentlichen parallel zu einer Außenfläche 70a des weiteren Führungseinheitshauptelements 22a verlaufenden weiteren Führungsfläche 24a abstützen.

Des Weiteren weist der Schneidstrang 12a eine Vielzahl an Schneidelementen 84a, 86a auf. Eine Anzahl der Schneidelemente 84a, 86a ist abhängig von einer Anzahl an Schneidenträgerelementen 32a, 34a. Ein Fachmann wird je nach Anzahl an Schneidenträgerelementen 32a, 34a eine geeignete Anzahl an Schneidelementen 84a, 86a auswählen. Die Schneidelemente 84a, 86a sind jeweils einstückig mit einem der Schneidenträgerelemente 32a, 34a ausgebildet. Ferner erstrecken sich die Schneidelemente 84a, 86a in der Schneidebene über die Führungsnut 66a hinaus, um ein Abtrennen und/oder ein Abtragen von Werkstoffteilchen eines zu bearbeitenden Werkstücks (hier nicht näher dargestellt) zu ermöglichen. Die Schneidelemente 84a, 86a können beispielsweise als Vollmeißel, Halbmeißel oder andere, einem Fachmann als sinnvoll erscheinende Schneidenarten ausgebildet sein, die dazu vorgesehen sind, ein Abtrennen und/oder ein Abtragen von Werkstoffteilchen eines zu bearbeitenden Werkstücks zu ermöglichen. Der Schneidstrang 12a ist endlos ausgebildet. Somit ist der Schneidstrang 12a als Schneidkette ausgebildet. Die Schneidenträgerelemente 32a, 34a sind hierbei als Kettenglieder ausgebildet, die mittels der bolzenförmigen Verbindungselemente 36a, 38a miteinander verbunden sind.

Zum Antrieb des Schneidstrangs 12a weist die Werkzeugmaschinentrennvorrichtung 10a das Drehmomentübertragungselement 46a auf, das zur Übertragung von Kräften und/oder von Drehmomenten auf den Schneidstrang 12a mit der Antriebseinheit 60a und/oder der Getriebeeinheit 62a verbindbar ist. Hierzu weist das Drehmomentübertragungselement 46a eine Kopplungsausnehmung 64a auf, in die ein Ritzel der Antriebseinheit 60a und/oder ein Zahnrad und/oder eine verzahnte Welle der Getriebeeinheit 62a in einem montierten Zustand eingreift. Die Kopplungsausnehmung 64a ist konzentrisch im Drehmomentübertragungselement 46a angeordnet. Ferner ist das Drehmomentübertragungselement 46a als Zahnrad ausgebildet. Das Drehmomentübertragungselement 46a ist zumindest teilweise in der Führungseinheit 14a gelagert. Hierbei ist das Drehmomentübertragungselement 46a, entlang einer Richtung senkrecht zur Schneidebene betrachtet, zumindest teilweise zwischen der Außenwand 72a des Führungseinheitshauptelements 16a und der Außenwand 74a des weiteren Führungseinheitshauptelements 22a angeordnet (Figur 4).

Das Drehmomentübertragungselement 46a ist mit einem Teilbereich in einer Ausnehmung 96a der Außenwand 72a des Führungseinheitshauptelements 16a und in einer Ausnehmung 98a der Außenwand 74a des weiteren Führungseinheitshauptelements 22a angeordnet. Das Drehmomentübertragungselement 46a weist hierbei zumindest in dem in den Ausnehmungen 96a, 98a angeordneten Teilbereich eine Erstreckung entlang einer Rotationsachse 100a des Drehmomentübertragungselements 46a auf, die bündig mit der Außenfläche 68a des Führungseinheitshauptelements 16a und/oder der Außenfläche 70a des weiteren Führungseinheitshauptelements 22a abschließt. Ferner weist der in den Ausnehmungen 96a, 98a angeordnete Teilbereich des Drehmomentübertragungselements 46a eine sich zumindest im Wesentlichen senkrecht zur Rotationsachse 100a des Drehmomentübertragungselements 46a erstreckende Außenabmessung auf, die zumindest 0,1 mm kleiner ist als eine sich zumindest im Wesentlichen senkrecht zur Rotationsachse 100a des Drehmomentübertragungselements 46a erstreckende Innenabmessung der Ausnehmungen 96a, 98a. Der in den Ausnehmungen 96a, 98a angeordnete Teilbereich des Drehmomentübertragungselements 46a ist entlang einer senkrecht zur Rotationsachse 100a verlaufenden Richtung jeweils beabstandet zu einem die jeweilige Ausnehmung 96a, 98a begrenzenden Rand der Außenwand 72a des Führungseinheitshauptelements 16a und der Außenwand 74a des weiteren Führungseinheitshauptelements 22a angeordnet. Somit weist der in den Ausnehmungen 96a, 98a angeordnete Teilbereich des Drehmomentübertragungselements 46a ein Spiel innerhalb der Ausnehmungen 96a, 98a auf.

Die Schneidenträgerelemente 32a, 34a des Schneidstrangs 12a weisen jeweils eine Antriebsausnehmung 88a, 90a auf, die jeweils in einem montierten Zustand auf einer dem Drehmomentübertragungselement 46a zugewandten Seite 102a, 104a des jeweiligen Schneidenträgerelements 32a, 34a angeordnet ist. Das Drehmomentübertragungselement 46a greift in zumindest einem Betriebszustand zum Antrieb des Schneidstrangs 12a in die Antriebsausnehmungen 88a, 90a ein. Das Drehmomentübertragungselement 46a umfasst Zähne 92a, 94a, die dazu vorgesehen sind, in zumindest einem Betriebszustand zum Antrieb des Schneidstrangs 12a in die Antriebsausnehmung 88a, 90a der Schneidenträgerelemente 32a, 34a einzugreifen. Ferner sind die dem Drehmomentübertragungselement 46a zugewandten Seiten 102a, 104a der Schneidenträgerelemente 32a, 34a kreisbogenförmig ausgebildet. Die dem Drehmomentübertragungselement 46a in einem montierten Zustand zugewandten Seiten 102a, 104a der Schneidenträgerelemente 32a, 34a sind jeweils in Teilbereichen 106a, 108a, 110a, 112a, zwischen einer Mittelachse 114a des jeweiligen Verbindungselements 36a, 38a und einer Mittelachse 76a, 78a der jeweiligen Verbindungsausnehmung 80a, 82a betrachtet, kreisbogenförmig ausgestaltet. Die kreisbogenförmigen Teilbereiche 106a, 108a, 110a, 112a sind jeweils angrenzend an die Antriebsausnehmungen 88a, 90a, in die das Drehmomentübertragungselement 46a eingreift, ausgebildet. Hierbei weisen die kreisbogenförmigen Teilbereiche 106a, 108a, 110a, 112a einen Radius auf, der einem Radius eines Verlaufs der Führungsnut 66a an den konvexen Enden 28a, 30a entspricht. Die Teilbereiche 106a, 108a, 110a, 112a sind konkav ausgebildet (Figur 6).

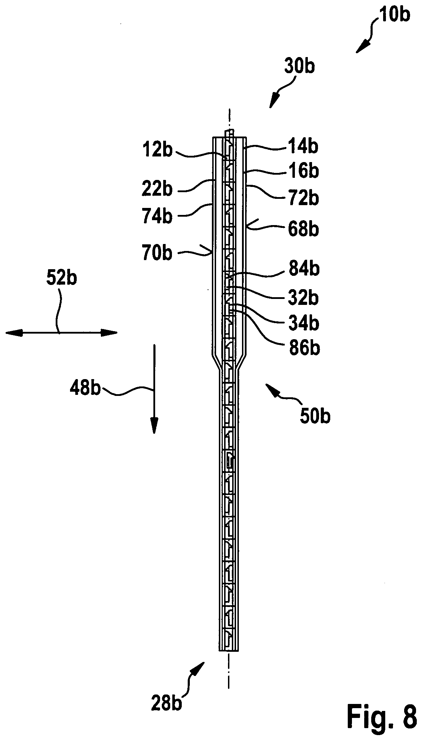

In Figuren 8 bis 12 sind alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis c hinzugefügt. Die nachfolgende Beschreibung beschränkt sich im Wesentlichen auf die Unterschiede zu dem ersten Ausführungsbeispiel in den Figuren 1 bis 7, wobei bezüglich gleichbleibender Bauteile, Merkmale und Funktionen auf die Beschreibung des ersten Ausführungsbeispiels in den Figuren 1 bis 7 verwiesen werden kann.

Figur 8 zeigt eine alternative Werkzeugmaschinentrennvorrichtung 10b in einem von einer Kopplungsvorrichtung einer tragbaren Werkzeugmaschine (hier nicht näher dargestellt) entkoppelten Zustand. Die tragbare Werkzeugmaschine und die Kopplungsvorrichtung weisen einen zum Ausführungsbeispiel, das in den Figuren 1 bis 7 beschrieben wurde, analogen Aufbau auf. Die Werkzeugmaschinentrennvorrichtung 10b weist einen Schneidstrang 12b und eine Führungseinheit 14b auf. Die Führungseinheit 14b umfasst ein Führungseinheitshauptelement 16b und ein weiteres Führungseinheitshauptelement 22b, die in einem montierten Zustand mittels einer formschlüssigen und/oder kraftschlüssigen Verbindung entlang einer Schneidebene des Schneidstrangs 12b lösbar miteinander verbunden sind. Des Weiteren weist die Führungseinheit 14b einen sich, entlang einer Schneidrichtung 48b des Schneidstrangs 12b betrachtet, zumindest in einem Teilbereich der Führungseinheit 14b verändernden Querschnitt in einer Richtung 52b zumindest im Wesentlichen senkrecht zur Schneidebene des Schneidstrangs 12b auf. Die Führungseinheit 14b weist in einem Übergangsbereich 50b, entlang der Schneidrichtung 48b betrachtet, eine Verjüngung auf. Es ist jedoch auch denkbar, dass die Führungseinheit 14b eine sprungartige Querschnittsveränderung aufweist.

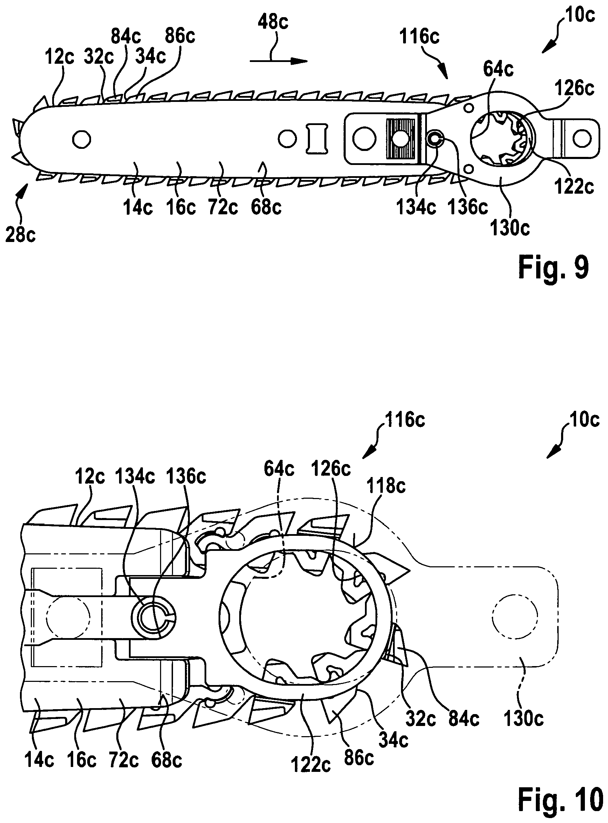

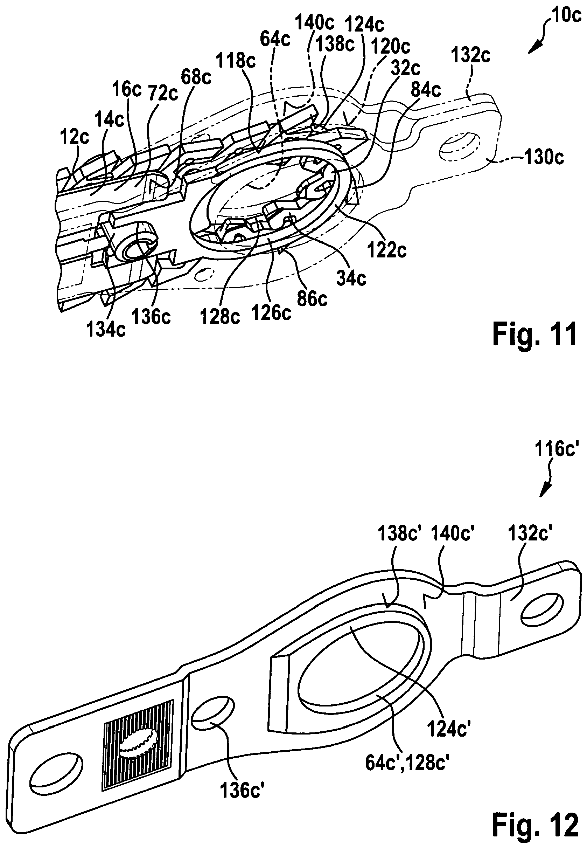

Figur 9 zeigt eine weitere, alternative Werkzeugmaschinentrennvorrichtung 10c in einem von einer Kopplungsvorrichtung einer tragbaren Werkzeugmaschine (hier nicht näher dargestellt) entkoppelten Zustand. Die Werkzeugmaschinentrennvorrichtung 10c umfasst zumindest einen Schneidstrang 12c und eine Führungseinheit 14c, die ein geschlossenes System bilden. Die Führungseinheit 14c umfasst hierbei zumindest eine Schneidstranghalteeinheit 116c, die zumindest zwei Führungsflächen 118c, 120c aufweist, die zueinander verschiedene Ausrichtungen aufweisen und die in einem montierten Zustand zur Führung des Schneidstrangs 12c vorgesehen sind (Figur 11). Eine der Führungsflächen 118c, 120c wird hierbei von zumindest einem Schneidstranghalteelement 122c der Schneidstranghalteeinheit 116c gebildet. Zudem wird eine der Führungsflächen 118c, 120c von zumindest einem Werkzeugmaschinenkopplungselement 130c der Schneidstranghalteeinheit 116c gebildet. Die von dem Schneidstranghalteelement 122c gebildete Führungsfläche 118c erstreckt sich zumindest im Wesentlichen senkrecht zu einer Schneidebene des Schneidstrangs 12c. Hierbei ist die von dem Schneidstranghalteelement 122c gebildete Führungsfläche 118c dazu vorgesehen, in einem von der tragbaren Werkzeugmaschine abgenommenen Zustand der Führungseinheit 14c ein komplettes Hineinfallen des Schneidstrangs 12c in eine Kopplungsausnehmung 64c weitestgehend zu verhindern. Hierbei liegen in einem von der tragbaren Werkzeugmaschine abgenommenen Zustand der Führungseinheit 14c Schneidelemente 84c, 86c von Schneidenträgerelementen 32c, 34c des Schneidstrangs 12c mit zumindest einer Fläche auf der Führungsfläche 118c auf (Fig. 10). Ein Aufliegen der Flächen der Schneidelemente 84c, 86c wird insbesondere infolge einer Verschränkung der Schneidelemente 84c, 86c relativ zueinander bzw. relativ zu einer Haupterstreckungsebene des jeweiligen Schneidenträgerelements 32c, 34c realisiert.

Ferner umfasst die Führungseinheit 14c zumindest ein Führungseinheitshauptelement 16c, das zumindest zwei Führungsflächen (hier nicht näher dargestellt) aufweist, die zueinander verschiedene Ausrichtungen aufweisen und die in einem montierten Zustand zur Führung des Schneidstrangs 12c vorgesehen sind. Zudem umfasst die Führungseinheit 14c ein weiteres Führungseinheitshauptelement (hier nicht näher dargestellt), das zumindest zwei Führungsflächen (hier nicht näher dargestellt) aufweist, die zueinander verschiedene Ausrichtungen aufweisen und die in einem montierten Zustand zur Führung des Schneidstrangs 12c vorgesehen sind. Es ist jedoch auch denkbar, dass die Führungseinheit 14c in einer hier nicht näher dargestellten, alternativen Ausgestaltung zwei seitliche Führungswände und ein mit den zwei seitlichen Führungswänden fest verbundenes Führungsmittelelement umfasst. Hierbei bilden die zwei seitlichen Führungswände jeweils eine zumindest im Wesentlichen parallel zu einer Außenfläche einer der seitlichen Führungswände verlaufende Führungsfläche der Führungseinheit 14c. Das Führungsmittelelement bildet in der hier nicht dargestellten, alternativen Ausgestaltung der Führungseinheit 14c eine zumindest im Wesentlichen senkrecht zur Außenfläche einer der seitlichen Führungswände verlaufende Führungsfläche.

Des Weiteren ist die Schneidstranghalteeinheit 116c zumindest teilweise an dem Führungseinheitshauptelement 16c angeordnet. Hierbei ist die Schneidstranghalteeinheit 116c mittels einer kraftschlüssigen und/oder mittels einer stoffschlüssigen Verbindung an dem Führungseinheitshauptelement 16c angeordnet. Es ist jedoch auch denkbar, dass die Schneidstranghalteeinheit 116c mittels einer anderen, einem Fachmann als sinnvoll erscheinenden Verbindungsart, wie beispielsweise mittels einer formschlüssigen Verbindung usw. an dem Führungseinheitshauptelement 16c angeordnet ist. Hierbei ist die Schneidstranghalteeinheit 116c zumindest teilweise an einer Außenwand 72c des Führungseinheitshauptelements 16c fixiert. Zudem ist die Schneidstranghalteeinheit 116c mittels einer kraftschlüssigen und/oder mittels einer stoffschlüssigen Verbindung an dem weiteren Führungseinheitshauptelement (hier nicht näher dargestellt) angeordnet. Hierbei erstreckt sich die Schneidstranghalteeinheit 116c, betrachtet in der Schneidebene des Schneidstrangs 12c, entlang zumindest einer Richtung über das Führungseinheitshauptelement 16c und das weitere Führungseinheitshauptelement hinaus. Bei der oben genannten, alternativen Ausgestaltung der Führungseinheit 14c, ist es denkbar, dass die Schneidstranghalteeinheit 116c mittels einer kraftschlüssigen und/oder mittels einer stoffschlüssigen Verbindung an den seitlichen Führungswänden angeordnet ist und sich, betrachtet in der Schneidebene, entlang zumindest einer Richtung über die seitlichen Führungswände hinaus erstreckt.

Die Werkzeugmaschinentrennvorrichtung 10c ist entkoppelt von einem Drehmomentübertragungselement ausgebildet. Zu einem Antrieb des in der Führungseinheit 14c angeordneten Schneidstrangs 12c wird der Schneidstrang 12c während einer Kopplung der Führungseinheit 14c mit der Kopplungsvorrichtung der tragbaren Werkzeugmaschine mit einem Antriebselement (hier nicht näher dargestellt) der tragbaren Werkzeugmaschine gekoppelt. Das Antriebselement greift hierbei in die Kopplungsausnehmung 64c der Führungseinheit 14c ein. Die Kopplungsausnehmung 64c wird hierbei teilweise von dem Werkzeugmaschinenkopplungselement 130c der Schneidstranghalteeinheit 116c gebildet. Zudem weist die Schneidstranghalteeinheit 116c zumindest das Schneidstranghalteelement 122c auf, das eine Antriebselementkopplungsausnehmung 126c aufweist. Die Antriebselementkopplungsausnehmung 126c ist mittels eines Zusammenwirkens mit der Kopplungsausnehmung 64c des Werkzeugmaschinenkopplungselements 130c dazu vorgesehen, in einem mit der tragbaren Werkzeugmaschine gekoppelten Zustands der Führungseinheit 14c eine Kopplung des Antriebselements mit dem Schneidstrang 12c zu ermöglichen. Hierbei ist die Antriebselementkopplungsausnehmung 126c oval ausgebildet. Es ist jedoch auch denkbar, dass die Antriebselementkopplungsausnehmung 126c eine andere, einem Fachmann als sinnvoll erscheinende Ausgestaltung aufweist. Das Schneidstranghalteelement 122c ist dazu vorgesehen, den Schneidstrang 12c in zumindest einer Position zu halten. Der Schneidstrang 12c wird in einem von der tragbaren Werkzeugmaschine entkoppelten Zustand der Führungseinheit 14c mittels des Schneidstranghalteelements 122c in einer Montageposition gehalten. Hierbei ist das Schneidstranghalteelement 122c scheibenförmig ausgebildet. Insgesamt weist die Schneidstranghalteeinheit 116c zumindest zwei Schneidstranghalteelemente 122c, 124c auf. Jedes der Schneidstranghalteelemente 122c, 124c weist jeweils eine Antriebselementkopplungsausnehmung 126c, 128c auf. Die zumindest zwei Schneidstranghalteelemente 122c, 124c weisen eine analoge Ausgestaltung auf. Es ist jedoch auch denkbar, dass die Schneidstranghalteelemente 122c, 124c eine zumindest geringfügig voneinander abweichende Ausgestaltung aufweisen, wie beispielsweise eine konvexe Ausgestaltung eines der zwei Schneidstranghalteelemente 122c, 124c und eine konkave Ausgestaltung des anderen der zwei Schneidstranghalteelemente 122c, 124c oder eine spiegelsymmetrische Ausgestaltung usw. Der Schneidstrang 12c wird in einem von der tragbaren Werkzeugmaschine entkoppelten Zustand der Führungseinheit 14c mittels eines Zusammenwirkens der zwei Schneidstranghalteelemente 122c, 124c in der Montageposition gehalten. Hierbei liegen die Schneidelemente 84c, 86c der Schneidenträgerelemente 32c, 34c des Schneidstrangs 12c an Führungsflächen 118c, 138c der Schneidstranghalteelemente 122c, 124 an (Fig. 10).

Zu einer Kopplung der Führungseinheit 14c und des Schneidstrangs 12c mit der tragbaren Werkzeugmaschine weist die Schneidstranghalteeinheit 116c zumindest das Werkzeugmaschinenkopplungselement 130c auf. Das Werkzeugmaschinenkopplungselement 130c ist an der Außenwand 72c des Führungseinheitshauptelements 16c angeordnet. Hierbei ist das Werkzeugmaschinenkopplungselement 130c mittels einer formschlüssigen und/oder mittels einer kraftschlüssigen Verbindung an der Außenwand 72c des Führungseinheitshauptelements 16c angeordnet. Das Werkzeugmaschinenkopplungselement 130c erstreckt sich, betrachtet in der Schneidebene des Schneidstrangs 12c, entlang zumindest einer Richtung über das Führungseinheitshauptelement 16c hinaus. Insgesamt weist die Schneidstranghalteeinheit 116c zumindest zwei Werkzeugmaschinenkopplungselemente 130c, 132c auf. Die Werkzeugmaschinenkopplungselemente weisen hierbei eine analoge Ausgestaltung auf. Somit bilden die Werkzeugmaschinenkopplungselemente 130c, 132c jeweils eine Führungsfläche 120c, 140c der Schneidstranghalteeinheit 116c, die zumindest im Wesentlichen parallel zur Schneidebene des Schneidstrangs 12c verlaufen. Es ist jedoch auch denkbar, dass die Werkzeugmaschinenkopplungselemente 130c, 132c eine zumindest geringfügig voneinander abweichende Ausgestaltung aufweisen, wie beispielsweise eine spiegelsymmetrische Ausgestaltung usw. Bei der oben genannten, alternativen Ausgestaltung der Führungseinheit 14c, ist es denkbar, dass das Werkzeugmaschinenkopplungselement oder die Werkzeugmaschinenkopplungselemente mittels einer kraftschlüssigen und/oder mittels einer stoffschlüssigen Verbindung an einer der seitlichen Führungswand oder den seitlichen Führungswänden angeordnet ist und sich entlang zumindest einer Richtung über die seitlichen Führungswände hinaus erstreckt.

Die Schneidstranghalteeinheit 116c umfasst zumindest das Schneidstranghalteelement 122c, das entlang einer zumindest im Wesentlichen senkrecht zu einer Schneidebene des Schneidstrangs 12c verlaufenden Richtung betrachtet zwischen den zumindest zwei Werkzeugmaschinenkopplungselementen 130c, 132c der Schneidstranghalteeinheit 116c angeordnet ist (Figur 11). Es sind beide Schneidstranghalteelement 122c, 124c, betrachtet entlang einer zumindest im Wesentlichen senkrecht zu einer Schneidebene des Schneidstrangs 12c verlaufenden Richtung, zwischen den zumindest zwei Werkzeugmaschinenkopplungselementen 130c, 132c der Schneidstranghalteeinheit 116c angeordnet. Hierbei sind die Schneidstranghalteelement 122c, 124c, betrachtet entlang einer zumindest im Wesentlichen senkrecht zu einer Schneidebene des Schneidstrangs 12c verlaufenden Richtung, voneinander beabstandet angeordnet. Hierdurch wird in einem mit der tragbaren Werkzeugmaschine gekoppelten Zustand der Führungseinheit 14c ein Eingreifen des Antriebselements der tragbaren Werkzeugmaschine zu einem Antrieb des Schneidstrangs 12c ermöglicht. Die Schneidstranghalteelemente 122c, 124c sind mittels eines bolzenförmigen Fixierungselements 134c zwischen den Werkzeugmaschinenkopplungselementen 130c, 132c gehalten. Das Fixierungselement 134c erstreckt sich in einem montierten Zustand zumindest im Wesentlichen senkrecht zur Schneidebene des Schneidstrangs 12c. Zudem ist das Fixierungselement 134c in einer Fixierungsausnehmung 136c des jeweiligen Werkzeugmaschinenkopplungselementen 130c, 132c angeordnet. Somit sind die Schneidstranghalteelemente 122c, 124c zumindest relativ zu den Werkzeugmaschinenkopplungselementen 130c, 132c fixiert.

In Figur 12 ist eine alternative Ausgestaltung einer Schneidstranghalteeinheit 116c' dargestellt. Die alternative Schneidstranghalteeinheit 116c' weist eine zumindest im Wesentlichen analoge Ausgestaltung zur Schneidstranghalteeinheit 116c aus den Figuren 9 bis 11 auf. Im Unterschied zur Schneidstranghalteeinheit 116c aus den Figuren 9 bis 11 weist die Schneidstranghalteeinheit 116c' ein Werkzeugmaschinenkopplungselement 132c' auf, das einstückig mit einem Schneidstranghalteelement 124c' der Schneidstranghalteeinheit 116c' ausgebildet ist. Hierbei ist ein hier nicht näher dargestelltes Werkzeugmaschinenkopplungselement der Schneidstranghalteeinheit 116c' ebenfalls einstückig mit einem hier nicht näher dargestellten Schneidstranghalteelement der Schneidstranghalteeinheit 116c' ausgebildet.

## Patentansprüche

1. Werkzeugmaschinentrennvorrichtung, insbesondere Handwerkzeugmaschinentrennvorrichtung, mit zumindest einem Schneidstrang (12a; 12b; 12c) und mit zumindest einer Führungseinheit (14a; 14b; 14c), die ein geschlossenes System bilden, wobei die Führungseinheit (14a; 14b; 14c) zumindest ein Führungseinheitshauptelement (16a; 16b) oder zumindest ein Führungseinheitshauptelement (16c) und eine Schneidstranghalteeinheit (116c; 116c') umfasst, wobei zumindest das Führungseinheitshauptelement (16a; 16b; 16c) und/oder die Schneidstranghalteeinheit (116c; 116c') zumindest zwei Führungsflächen (18a, 20a; 18b, 20b; 118c, 120c, 138c, 140c; 138c', 140c') aufweisen/aufweist, die zueinander verschiedene Ausrichtungen aufweisen und die in einem montierten Zustand zur Führung des Schneidstrangs (12a; 12b; 12c) vorgesehen sind, **dadurch gekennzeichnet, dass** der Schneidstrang (12a) zumindest zwei miteinander verbundene Schneidenträgerelemente (32a, 34a) umfasst, die mittels zumindest eines Verbindungselements (36a, 38a) des Schneidstrangs (12a) miteinander verbunden sind, das zumindest im Wesentlichen bündig mit zumindest einer Außenfläche (40a, 42a) eines der zumindest zwei Schneidenträgerelemente (32a, 34a) abschließt, wobei das Verbindungselement bolzenförmig und einstückig mit einem Schneidenträgerelement ausgebildet.

2. Werkzeugmaschinentrennvorrichtung nach Anspruch 1, **dadurch gekennzeichnet, dass** die Führungseinheit (14a; 14b) zumindest ein weiteres Führungseinheitshauptelement (22a; 22b) umfasst, das zumindest zwei Führungsflächen (24a, 26a; 24b, 26b) aufweist, die zueinander verschiedene Ausrichtungen aufweisen und die in einem montierten Zustand zur Führung des Schneidstrangs (12a; 12b) vorgesehen sind.

3. Werkzeugmaschinentrennvorrichtung nach Anspruch 2, **dadurch gekennzeichnet, dass** das Führungseinheitshauptelement (16a; 16b) und das weitere Führungseinheitshauptelement (22a; 22b) in einem montierten Zustand mittels einer formschlüssigen und/oder kraftschlüssigen Verbindung miteinander verbunden sind.

4. Werkzeugmaschinentrennvorrichtung nach einem der vorhergehenden Ansprüche, **dadurch gekennzeichnet, dass** die Führungseinheit (14a; 14b), in einer Schneidebene des Schneidstrangs (12a; 12b) betrachtet, zumindest zwei konvex ausgebildete Enden (28a, 30a; 28b, 30b) aufweist.

5. Werkzeugmaschinentrennvorrichtung nach einem der vorhergehenden Ansprüche, **dadurch gekennzeichnet, dass** die Schneidstranghalteeinheit (116c; 116c') zumindest teilweise an dem Führungseinheitshauptelement (16c) angeordnet ist.

6. Werkzeugmaschinentrennvorrichtung nach einem der vorhergehenden Ansprüche, **dadurch gekennzeichnet, dass** die Schneidstranghalteeinheit (116c; 116c') zumindest ein scheibenförmiges Schneidstranghalteelement (122c, 124c; 124c') umfasst, das dazu vorgesehen ist, den Schneidstrang (12c) in zumindest einer Montageposition zu halten.

7. Werkzeugmaschinentrennvorrichtung nach Anspruch 6, **dadurch gekennzeichnet, dass** das Schneidstranghalteelement (122c, 124c; 124c') zumindest eine Antriebselementkopplungsausnehmung (126c, 128c; 128c') aufweist.

8. Werkzeugmaschinentrennvorrichtung nach einem der vorhergehenden Ansprüche, **dadurch gekennzeichnet, dass** die Schneidstranghalteeinheit (116c') zumindest das Schneidstranghalteelement (124c') und zumindest ein Werkzeugmaschinenkopplungselement (132c') aufweist, das einstückig mit dem Schneidstranghalteelement (124c') ausgebildet ist.

9. Werkzeugmaschinentrennvorrichtung nach einem der vorhergehenden Ansprüche, **dadurch gekennzeichnet, dass** die Schneidstranghalteeinheit (116c; 116c') zumindest das Schneidstranghalteelement (122c, 124c; 124c') umfasst, das entlang einer zumindest im Wesentlichen senkrecht zu einer Schneidebene des Schneidstrangs (12c) verlaufenden Richtung betrachtet zwischen zumindest zwei Werkzeugmaschinenkopplungselementen (130c, 132c; 132c') der Schneidstranghalteeinheit (116c; 116c') angeordnet ist.

10. Werkzeugmaschinentrennvorrichtung nach Anspruch 9, **dadurch gekennzeichnet, dass** das Verbindungselement (36a, 38a) zumindest teilweise mittels eines Führungselements (44a) der Führungseinheit (14a) geführt ist.

11. Werkzeugmaschinentrennvorrichtung nach einem der vorhergehenden Ansprüche, **gekennzeichnet durch** ein Drehmomentübertragungselement (46a), das zumindest teilweise in der Führungseinheit (14a) gelagert ist.

12. Werkzeugmaschinentrennvorrichtung nach einem der vorhergehenden Ansprüche, **dadurch gekennzeichnet, dass** die Führungseinheit (14b) einen sich, entlang einer Schneidrichtung (48b) des Schneidstrangs (12b) betrachtet, zumindest in einem Teilbereich (50b) der Führungseinheit (14b) verändernden Querschnitt in einer Richtung (52b) zumindest im Wesentlichen senkrecht zu einer Schneidebene des Schneidstrangs (12b) aufweist.

13. Werkzeugmaschinensystem mit zumindest einer Werkzeugmaschinentrennvorrichtung nach einem der Ansprüche 1 bis 12 und mit einer tragbaren Werkzeugmaschine, die eine Kopplungsvorrichtung (56a) zur formschlüssigen und/oder kraftschlüssigen Kopplung mit der Werkzeugmaschinentrennvorrichtung umfasst, wobei die Werkzeugmaschinentrennvorrichtung getrennt von einem in der Führungseinheit (16c) angeordneten Drehmomentübertragungselement ausgebildet ist und der Schneidstrang (12c) mittels der Schneidstranghalteeinheit (116c; 116c') auf einer Antriebsseite der Führungseinheit (14c) in einem von der Kopplungsvorrichtung (56a) demontierten Zustand der Werkzeugmaschinentrennvorrichtung in einer Montageposition des Schneidstrangs (12c) haltbar ist.

## Claims

1. Machine tool separating device, in particular handheld machine tool separating device, having at least one cutting strand (12a; 12b; 12c) and having at least one guide unit (14a; 14b; 14c) which form a closed system, wherein the guide unit (14a; 14b; 14c) includes at least one guide unit main element (16a; 16b) or at least one guide unit main element (16c) and a cutting strand holding unit (116c; 116c'), wherein at least the guide unit main element (16a; 16b; 16c) and/or the cutting strand holding unit (116c; 116c') have/has at least two guide surfaces (18a, 20a; 18b, 20b; 118c, 120c, 138c, 140c; 138c', 140c') which have different alignments with respect to one another and which, in a mounted state, are provided for guiding the cutting strand (12a; 12b; 12c), **characterized in that** the cutting strand (12a) includes at least two interconnected cutting edge carrying elements (32a, 34a) which are connected together by means of at least one connecting element (36a, 38a) of the cutting strand (12a) which closes off in an at least substantially flush manner with at least one outside surface (40a, 42a) of one of the at least two cutting edge carrying elements (32a, 34a), wherein the connecting element is realized in a bolt-shaped manner and integrally with a cutting edge carrying element.

2. Machine tool separating device according to Claim 1, **characterized in that** the guide unit (14a; 14b) includes at least one further guide unit main element (22a; 22b) which has at least two guide surfaces (24a, 26a; 24b, 26b) which have different alignments with respect to one another and which, in a mounted state, are provided for guiding the cutting strand (12a; 12b).

3. Machine tool separating device according to Claim 2, **characterized in that** the guide unit main element (16a; 16b) and the further guide unit main element (22a; 22b), in a mounted state, are connected together by means of a positive-locking and/or friction-locking connection.

4. Machine tool separating device according to one of the preceding claims, **characterized in that** the guide unit (14a; 14b), when viewed in a cutting plane of the cutting strand (12a; 12b), has at least two convexly realized ends (28a, 30a; 28b, 30b).

5. Machine tool separating device according to one of the preceding claims, **characterized in that** the cutting strand holding unit (116c; 116c') is arranged at least in part on the guide unit main element (16c).

6. Machine tool separating device according to one of the preceding claims, **characterized in that** the cutting strand holding unit (116c; 116c') includes at least one disc-shaped cutting strand holding element (122c, 124c; 124c') which is provided for the purpose of holding the cutting strand (12c) in at least one mounting position.

7. Machine tool separating device according to Claim 6, **characterized in that** the cutting strand holding element (122c, 124c; 124c') has at least one drive element coupling recess (126c, 128c; 128c').

8. Machine tool separating device according to one of the preceding claims, **characterized in that** the cutting strand holding unit (116c') has at least the cutting strand holding element (124c') and at least one machine tool coupling element (132c') which is realized integrally with the cutting strand holding element (124c').

9. Machine tool separating device according to one of the preceding claims, **characterized in that** the cutting strand holding unit (116c; 116c') includes at least the cutting strand holding element (122c, 124c; 124c') which, when viewed along a direction which extends at least substantially at right angles to a cutting plane of the cutting strand (12c), is arranged between at least two machine tool coupling elements (130c, 132c; 132c') of the cutting strand holding unit (116c; 116c').

10. Machine tool separating device according to Claim 9, **characterized in that** the connecting element (36a, 38a) is guided at least in part by means of a guide element (44a) of the guide unit (14a).

11. Machine tool separating device according to one of the preceding claims, **characterized by** a torque transmitting element (46a) which is mounted at least in part in the guide unit (14a).

12. Machine tool separating device according to one of the preceding claims, **characterized in that** the guide unit (14b), when viewed along a cutting direction (48b) of the cutting strand (12b), has a cross section which changes at least in a part region (50b) of the guide unit (14b) in a direction (52b) at least substantially at right angles to a cutting plane of the cutting strand (12b).

13. Machine tool system having at least one machine tool separating device according to one of Claims 1 to 12 and having a portable machine tool which includes a coupling device (56a) for positive-locking and/or friction-locking coupling with the machine tool separating device, wherein the machine tool separating device is realized separately from a torque transmitting element arranged in the guide unit (16c), and the cutting strand (12c) can be held in a mounting position of the cutting strand (12c) by means of the cutting strand holding unit (116c; 116c') on a drive side of the guide unit (14c), with the machine tool separating device removed from the coupling device (56a).

## Revendications

1. Dispositif de séparation de machine-outil, en particulier dispositif de séparation de machine-outil à main, comprenant au moins une section de coupe (12a ; 12b ; 12c) et au moins une unité de guidage (14a ; 14b ; 14c), lesquelles forment un système fermé, l'unité de guidage (14a ; 14b ; 14c) comprenant au moins un élément principal d'unité de guidage (16a ; 16b) ou au moins un élément principal d'unité de guidage (16c) et une unité de retenue de section de coupe (116c ; 116c'), au moins l'élément principal d'unité de guidage (16a ; 16b ; 16c) et/ou l'unité de retenue de section de coupe (116c ; 116c') présentant au moins deux surfaces de guidage (18a, 20a ; 18b, 20b ; 118c, 120c, 138c, 140c ; 138c', 140c'), qui présentent des orientations différentes les unes des autres et qui sont prévues, dans un état monté, pour guider la section de coupe (12a ; 12b ; 12c), **caractérisé en ce que** la section de coupe (12a) comprend au moins deux éléments de support de lame de coupe (32a, 34a) reliés l'un à l'autre, qui sont reliés l'un à l'autre au moyen d'au moins un élément de liaison (36a, 38a) de la section de coupe (12a) qui se termine au moins essentiellement en affleurement avec au moins une surface extérieure (40a, 42a) de l'un des au moins deux éléments de support de lame de coupe (32a, 34a), l'élément de liaison étant réalisé en forme de boulon et d'une seule pièce avec un élément de support de lame de coupe.

2. Dispositif de séparation de machine-outil selon la revendication 1, **caractérisé en ce que** l'unité de guidage (14a ; 14b) comprend au moins un élément principal d'unité de guidage supplémentaire (22a ; 22b) qui présente au moins deux surfaces de guidage (24a, 26a ; 24b, 26b) qui présentent des orientations différentes les unes des autres et qui sont prévues dans un état monté pour guider la section de coupe (12a ; 12b).

3. Dispositif de séparation de machine-outil selon la revendication 2, **caractérisé en ce que** l'élément principal d'unité de guidage (16a ; 16b) et l'élément principal d'unité de guidage supplémentaire (22a ; 22b), dans un état monté, sont reliés l'un à l'autre au moyen d'une liaison par engagement par correspondance géométrique et/ou par force.

4. Dispositif de séparation de machine-outil selon l'une quelconque des revendications précédentes, **caractérisé en ce que** l'unité de guidage (14a ; 14b), vue dans un plan de coupe de la section de coupe (12a ; 12b), présente au moins deux extrémités réalisées sous forme convexe (28a, 30a ; 28b, 30b).

5. Dispositif de séparation de machine-outil selon l'une quelconque des revendications précédentes, **caractérisé en ce que** l'unité de retenue de section de coupe (116c ; 116c') est disposée au moins en partie au niveau de l'élément principal d'unité de guidage (16c).

6. Dispositif de séparation de machine-outil selon l'une quelconque des revendications précédentes, **caractérisé en ce que** l'unité de retenue de section de coupe (116c ; 116c') comprend au moins un élément de retenue de section de coupe en forme de disque (122c, 124c ; 124c') qui est prévu pour retenir la section de coupe (12c) dans au moins une position de montage.

7. Dispositif de séparation de machine-outil selon la revendication 6, **caractérisé en ce que** l'élément de retenue de section de coupe (122c, 124c ; 124c') présente au moins un évidement d'accouplement d'éléments d'entraînement (126c, 128c ; 128c').

8. Dispositif de séparation de machine-outil selon l'une quelconque des revendications précédentes, **caractérisé en ce que** l'unité de retenue de section de coupe (116c') présente au moins l'élément de retenue de section de coupe (124c') et au moins un élément d'accouplement de machine-outil (132c') qui est réalisé d'une seule pièce avec l'élément de retenue de section de coupe (124c').

9. Dispositif de séparation de machine-outil selon l'une quelconque des revendications précédentes, **caractérisé en ce que** l'unité de retenue de section de coupe (116c ; 116c') comprend au moins l'élément de retenue de section de coupe (122c, 124c ; 124c') qui, considéré le long d'une direction s'étendant au moins essentiellement perpendiculairement à un plan de coupe de la section de coupe (12c), est disposé au moins entre deux éléments d'accouplement de machine-outil (130c, 132c ; 132c') de l'unité de retenue de section de coupe (116c ; 116c').

10. Dispositif de séparation de machine-outil selon la revendication 9, **caractérisé en ce que** l'élément de liaison (36a, 38a) est guidé au moins en partie au moyen d'un élément de guidage (44a) de l'unité de guidage (14a).

11. Dispositif de séparation de machine-outil selon l'une quelconque des revendications précédentes, **caractérisé par** un élément de transfert de couple (46a) qui est supporté au moins en partie dans l'unité de guidage (14a).

12. Dispositif de séparation de machine-outil selon l'une quelconque des revendications précédentes, **caractérisé en ce que** l'unité de guidage (14b) présente une section transversale, considérée le long d'une direction de coupe (48b) de la section de coupe (12b), variant au moins dans une région partielle (50b) de l'unité de guidage (14b), dans une direction (52b) au moins essentiellement perpendiculairement à un plan de coupe de la section de coupe (12b).

13. Système de machine-outil comprenant au moins un dispositif de séparation de machine-outil selon l'une quelconque des revendications 1 à 12 et comprenant une machine-outil portative qui comprend un dispositif d'accouplement (56a) pour l'accouplement par engagement par correspondance géométrique et/ou par force au dispositif de séparation de machine-outil, le dispositif de séparation de machine-outil étant réalisé séparément d'un élément de transfert de couple disposé dans l'unité de guidage (16c) et la section de coupe (12c) pouvant être retenue dans une position de montage de la section de coupe (12c) au moyen de l'unité de retenue de section de coupe (116c ; 116c') sur un côté d'entraînement de l'unité de guidage (14c) dans un état du dispositif de séparation de machine-outil démonté du dispositif d'accouplement (56a).
